# EUROPÄISCHE PATENTSCHRIFT

(11) **EP 1 022 830 B1**
(45) Veröffentlichungstag und Bekanntmachung des Hinweises auf die Patenterteilung: **09.03.2005**
(21) Anmeldenummer: 98811265.2
(22) Anmeldetag: 24.12.1998
(51) Int. Cl.: H02B 1/56, H02G 5/10

(54) **Abschnitt einer Hochspannungsanlage mit Kühlmitteln**
Section of a high-voltage installation with cooling means
Section d'une installation haute-tension avec des moyens de refroidissement

(43) Veröffentlichungstag der Anmeldung: 26.07.2000
(60) Teilanmeldung: 03019828.7
(73) Patentinhaber: ABB Schweiz AG, 5400 Baden (CH)
(72) Erfinder: Wilfert,Günter,Dr., 83626 Valley (DE); Kübler,Günter, 8032 Zürich (CH); Parneix,Sacha,Dr., 8057 Zürich (CH); Malfa,Enrico, Zanica(BG) (IT)
(74) Vertreter: ABB Patent Attorneys

(56) Entgegenhaltungen:
- CH-A- 664 852
- US-A- 3 230 293
- US-A- 3 364 838

## Beschreibung

### Technisches Gebiet

Die Erfindung bezieht sich auf einen Abschnitt einer elektrischen Hochspannungsanlage nach dem Oberbegriff von Anspruch 1 (siehe US-A-3230293). Diese Anlage ist zum Übertragen grôsser elektrischer Leistung im Mega- bis Gigawattbereich geeignet. Die hierbei auftretenden Ströme bzw. Spannungen liegen im kA- bzw. kV-Bereich. Eine typische Anlage umfasst mehrphasige Generatorableitungen, in denen in den einzelnen Phasen Betriebsströme zwischen 5 und 30 kA und Betriebsspannungen von beispielsweise 15 oder 21 kV auftreten. Eine solche Hochspannungsanlage weist Abschnitte auf, in denen infolge von verhältnismässig grossen Stromverlusten eine starke Erwärmung auftritt. Einer erheblichen Erwärmung sind Abschnitte ausgesetzt, in denen der Strom durch einen Kontaktübergang, etwa eine Schaltstelle, geführt wird. Solche Schaltstellen sind im allgemeinen Generatorschalter.

### Stand der Technik

Generatorschalter werden üblicherweise über natürliche Konvektion und Strahlung gekühlt. Sind solche Schalter ungekapselt ausgeführt, so wird die Verlustleistung des Stromleiters in Form von Wärme auf einen die Kontaktanordnung des Schalters enthaltenden Löschkammerisolator mit vertikal geführten Kühlrippen übertragen. Die vom Löschkammerisolator aufgenommene Wärme wird durch Konvektion und Strahlung an die Umgebung abgegeben. Solche Generatorschalter werden von der Firma ABB High Voltage Technologies Ltd. Zürich/Switzerland mit der Typenbezeichnung HEI 1 ...HEI 5 vertrieben. Darüber hinaus vertreibt die vorgenannte Firma mit der Typenbezeichnung HEC3/HEC4 auch Generatorschalter, bei denen der Stromleiter und der Löschkammerisolator in einem mit Isoliergas, insbesondere mit Luft, gefüllten Gehäuse angeordnet sind. Die im Stromleiter gebildete und überwiegend an den Löschkammerisolator geführte Wärme wird dann über natürliche Konvektion und Strahlung an das Gehäuse abgegeben. Die Wärmeabgabe erfolgt dabei durch die sich einstellenden Temperaturunterschiede zwischen Stromleiter bzw. Löschkammerisolator und Gehäuse. Die vom Gehäuse aufgenommene Wärme wird über natürliche Konvektion und Strahlung an die Umgebung aufgrund des Temperaturunterschiedes zwischen Gehäuse und Umgebung abgeführt. Der Wärmefluss in einem solchen System stellt sich von selbst ein, ist hauptsächlich von geometrischen Abmessungen, verwendeten Materialien und Oberflächenkonfigurationen abhängig und wird durch die Mechanismen der Wärmeabgabe limitiert. Ist der Generatorschalter dreiphasig ausgebildet, wobei die drei Phasen nebeneinander angeordnet sind, so weist das Gehäuse der in der Mitte angeordneten Phase immer die höchsten Temperaturen auf, da die Seitenwände keine Strahlungsenergie abgeben können, und muss dann besonders intensiv gekühlt werden.

### Darstellung der Erfindung

Es stellt sich deshalb die Aufgabe, einen Abschnitt für eine Hochspannungsanlage der eingangs genannten Art mit Kühlmitteln zu versehen, die möglichst einfach aufgebaut ist und dennoch eine erhebliche Erhöhung des Anlagenstroms ermöglicht, ohne dass die geometrischen Abmessungen der Anlage verändert werden.

Diese Aufgabe wird vom Anlagenabschnitt gemäss den Patentansprüchen erfüllt.

Erfindungsgemäss weist der vorzugsweise als Generatorschalter ausgebildete Abschnitt der Hochspannnungsanlage als Kühlmittel mindestens eine Strömungsquelle auf, welche derart im Inneren des Gehäuses angeordnet und derart ausgebildet ist, dass sich bei Betrieb der Anlage zwei von der Symmetrieebene begrenzte, spiegelsymmetrische Teilzirkulationsströmungen ausbilden, welche jeweils längs einer ersten Gehäusewand rezirkulationsfrei von einer von der Symmetrieebene geschnittenen zweiten Gehäusewand zu einer von der Symmetrieebene geschnittenen dritten Gehäusewand geführt sind. Durch diese Massnahmen wird erreicht, dass der Wärmeübergang vom Stromleiter zum Gehäuse erhöht wird, und dass damit am Stromleiter eine Grenztemperatur nicht überschritten wird, welche bestimmt ist durch die Isolationsklassen von den Stromleiter haltenden Isolatoren.

Ein besonders wirkungsvoller Wärmeübergang auf das Gehäuse wird erreicht, wenn Strömungsquellen vorgesehen sind, von denen jeweils eine je einer der beiden Teilzirkulationsströmungen zugeordnet ist. Vorzugsweise ist die Symmetrieebene hierbei überwiegend vertikal ausgerichtet ist. Die erste Gehäusewand ist dann eine Seitenwand, die zweite Gehäusewand eine Decke und die dritte Gehäusewand ein Boden des Gehäuses. Sind nun die beiden Strömungsquellen an entgegengesetzten Enden des Gehäusebodens befestigt und weist dann die am jeweiligen Ende ansetzende Seitenwand Strömungsleitflächen auf, so verlaufen die Teilzirkulationsströme wie die natürliche Konvektion und es reichen dann besonders schwach dimensionierte Strömungsquellen aus. Die in die Seitenwände reichenden Strömungsleitflächen verhindern bzw. verringern hierbei eine Rezirkulation der Teilzirkulationsströme und verbessern so die Wärmeabfuhr vom Stromleiter auf das Gehäuse ganz wesentlich.

Die Strömungsquellen können auch ohne die Verwendung von Strömungsleitflächen an den entgegengesetzten Enden der Gehäusedecke oder des Gehäusebodens befestigt sein. Um sicherzustellen, dass die beiden Teilzirkulationsströmungen ohne Rezirkulation verlaufen, sollten dann die beiden Strömungsquellen entweder am Gehäuseboden angeordnet sein und dann eine an den Seitenwänden aufsteigende, entgegen der natürlichen Konvektion gerichtete Strömung erzeugen oder an der Gehäusedecke angeordnet sein und dann eine an den Seitenwänden absteigende Strömung erzeugen, welche die natürliche Konvektion in energietechnisch besonders vorteilhafter Weise unterstützt.

Weist der Anlagenabschnitt mindestens drei jeweils einen Stromleiter aufnehmende Gehäuse auf, welche an ihren Gehäuseseitenwänden unter Bildung vertikal ausgerichteter Kanäle mit Abstand nebeneinander angeordnet sind, so sollten die Strömungsquellen im mittleren der drei Gehäuse vorgesehen sein. Die durch die Teilzirkulationsströmungen an die Gehäuseseitenwände geführte Wärme kann dann durch die Kaminwirkung der beiden Kanäle abgeführt werden. Diese Kaminwirkung kann durch eine oder mehrere ausserhalb der Gehäuse angebrachte Strömungsquelle(n) unterstützt werden.

Vorzugsweise ist in mindestens einem der Kanäle parallel zu den begrenzenden Seitenwänden dieses Kanals eine Zwischenwand angeordnet. Diese Zwischenwand nimmt von den den Kanal begrenzenden Seitenwänden Strahlungsenergie auf, welche dann infolge der Kaminwirkung aus dem Kanal entfernt werden kann. Zugleich verringert die Zwischenwand den Volumenstrom und damit die Leistung der aussenliegenden Strömungsquellen. Der Kanal sollte eine solche Breite aufweisen, dass der durch den Kanal geführte Volumenstrom mit oder ohne Zwischenwand nicht gestört und die ihn bildende Luft nicht zu stark aufgeheizt wird.

Eine besonders gute Wärmeabgabe der Zwischenwand an den infolge Konvektion und/oder der zusätzlichen Strömungsquellen aufsteigenen Luftstrom wird durch in die Zwschenwand eingeformte oberflächenvergrössernde Mittel erreicht. Solche Mittel können vertikal geführte Wellen und/oder Längsrippen umfassen, können aber auch eine parallel zur Zwischenwand geführte weitere Zwischenwand umfassen, welche in besonders vorteilhafter Weise mit der Zwischenwand durch vertikal geführte Längsrippen verbunden sein kann.

### Kurze Beschreibung der Zeichnungen

Weitere Vorteile und Anwendungen der Erfindung ergeben sich aus der nun folgenden Beschreibung anhand der Figuren. Dabei zeigen:
Figuren 1 bis 3 jeweils eine Aufsicht auf einen quer zum Stromleiter geführten Schnitt durch drei erfindungsgemäss ausgeführte Abschnitte einer einphasig ausgebildeten Hochspannungsanlage,
Figuren 4 und 5 jeweils eine Aufsicht auf einen quer zu den Stromleitem geführten Schnitt durch zwei erfindungsgemäss ausgeführte Abschnitte einer dreiphasig ausgebildeten Hochspannungsanlage, und
Figuren 6 bis 8 jeweils eine Draufsicht auf den Anlagenabschnitt nach Fig. 4.

### Wege zur Ausführung der Erfindung

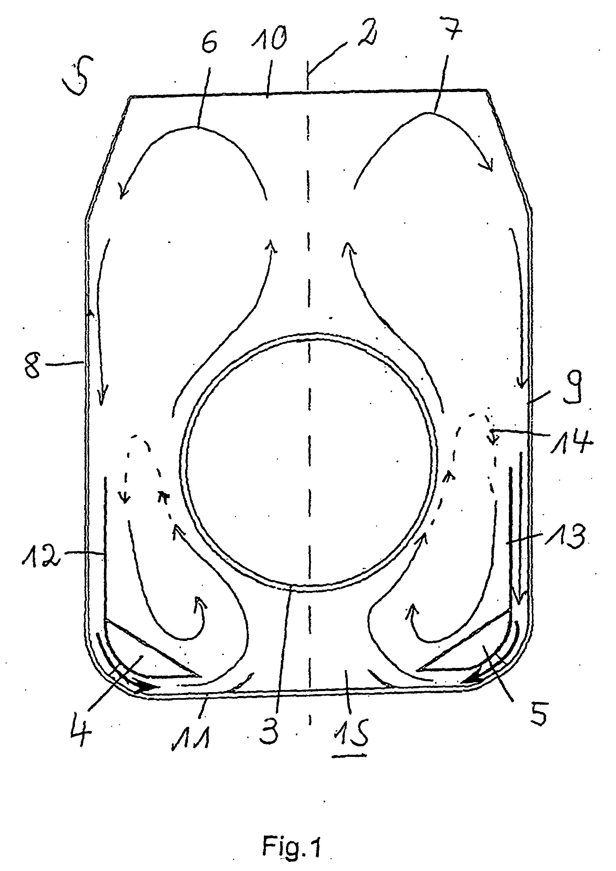

In allen Figuren bezeichnen gleiche Bezugszeichen auch gleichwirkende Teile. In den Figuren 1 bis 3 ist jeweils ein einer Phase S einer dreiphasigen Hochspannnungsanlage zugeordneter Schalterpol eines Generatorschalters dargestellt. Der Schalterpol weist ein vorzugsweise metallenes, auf Erdpotential befindliches Gehäuse 1S von kastenförmigem Profil auf, welches im wesentlichen spiegelsymmetrisch ausgebildet ist. Die zugeordnete Symmetrieebene 2 erstreckt sich senkrecht zur Zeichenebene und ist zugleich auch Symmetrieebene für einen überwiegend symmetrisch ausgeführten, hohlzylinderförmigen Stromleiter 3. Der Stromleiter 3 ist unter Bildung eines elektrischen Isolationsabstandes vom Gehäuse 1S auf nicht dargestellten Stützisolatoren gehalten und ist senkrecht zur Zeichenebene nach oben und unten geführt.

Typischerweise führt der Stromleiter 3 Betriebsströme von 5 bis 30 kA bei Betriebsspannungen von 10 bis 36 kV. Infolge ohmscher Verluste, welche insbesondere an Kontaktübergängen beträchtlich sein können, erwärmt sich der Stromleiter 3 erheblich. Die im Stromleiter gebildete Wärme wird über natürliche Konvektion und Strahlung an das Gehäuse 1S abgegeben. Um die Wärmeabgabe durch Konvektion zu begünstigen, sind im Gehäuse 1S zwei jeweils als linienförmig wirkende Gebläse 4, 5 ausgebildete Strömungsquellen enthalten, welche derart angeordnet und ausgebildet sind, dass sich bei Betrieb der Anlage zwei von der Symmetrieebene 2 begrenzte, spiegelsymmetrische Teilzirkulationsströmungen 6 bzw. 7 ausbilden. Diese Teilzirkulationsströmungen 6 bzw. 7 sind jeweils längs einer Seitenwand 8 bzw. 9 überwiegend rezirkulationsfrei von der Decke 10 des Gehäuses 1S zu dessen Boden 11 geführt und steigen von dort infolge natürlicher Konvektion sowie der Wirkung der Gebläse 4 bzw. 5 parallel zur Symmetrieebene 2 zum Stromleiter 3 auf, umströmen unter Aufnahme von Verlustwärme dessen linke bzw. rechte Seitenfläche und werden zurück an die Decke 10 geführt, von wo sie dann unter Abgabe der aufgenommenen Wärme längs der Gehäusewände (Decke 10, Seitenwand 8 bzw. 9 und Boden 11) wieder an die Gebläse 4, 5 gelangen.

Durch die Verwendung der Gebläse 4, 5 wird der Wärmeübergang vom Stromleiter 3 zum Gehäuse 1 S erhöht. Der Stromleiter 3 kann daher mit höheren Strömen belastet werden. Es ist lediglich zu beachten, dass die Temperatur des Gehäuses 1S sich nicht zu stark erwärmt.

Die Rezirkulationsfreiheit der Teilzirkulationsströmungen 6 und 7 wird bei der Ausführungsform nach Fig. 1 dadurch erreicht, dass die beiden Gebläse 4 und 5 an entgegengesetzten Enden des Gehäusebodens 11 befestigt sind, und dass an den an den jeweiligen Enden ansetzenden Seitenwänden 8 und 9 Strömungsleitflächen 12 und 13 vorgesehen sind. Ohne diese Vorkehrungen würden die Teilzirkulationsströmungen 6 bzw. 7 sonst zum grossen Teil schon vor Erreichen der Gehäusedecke 10 wieder nach unten geführt (gestrichelt angegebene Strömungspfeile 14) und könnte so die Kühlwirkung der Gehäusedecke 10 und der Gehäuseseitenwände 8, 9 nicht vollständig ausgenutzt werden.

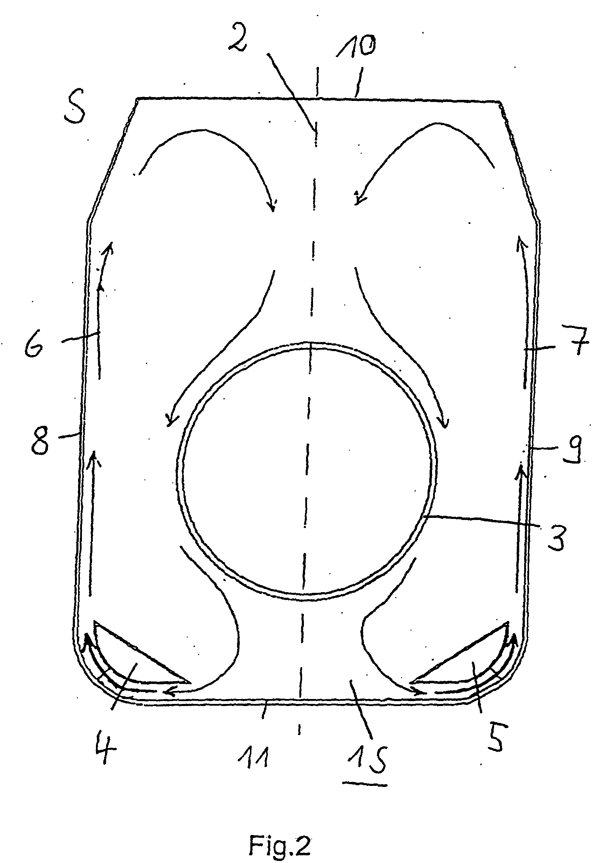

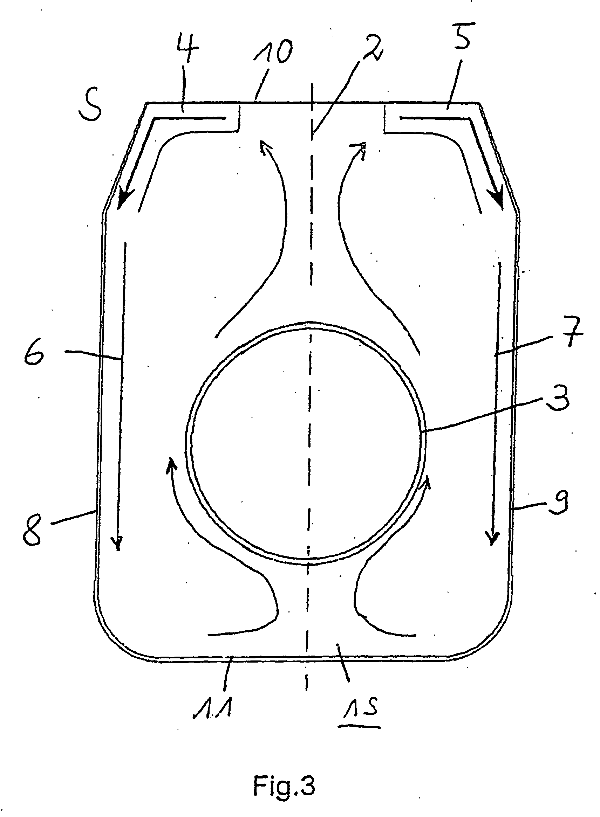

Bei der Ausführungsform nach Fig.2 erzeugen die an entgegengesetzten Enden des Gehäusebodens angeordneten Gebläse 4 und 5 entgegen der natürlichen Konvektion gerichtete Teilzirkulationsströmungen 6 bzw. 7. Vom Stromleiter abgegebene Wärme wird dann von den zunächst absteigenden Teilzirkulationsströmungen 6 und 7 nach unten geführt und danach über die Gebläse 4 und 5 an den Gehäuseseitenwänden 8 und 9 nach oben geführt. Das in den Teilzirkulationsströmungen 6, 7 geführte Gas wird dabei abgekühlt. Rezirkulationsverhindernde Mittel, wie die Strömungsleitflächen 12 bzw. 13 bei der Ausführungsform nach Fig.3, können so entfallen.

Bei der Ausführungsform nach Fig.3 sind die Gebläse 4 bzw. 5 an der Gehäusedecke 10 befestigt und erzeugen die natürliche Konvektion unterstützende Teilzirkulationsströmungen 6 und 7. Entsprechend der Ausführungsform nach Fig. 2 können auch hier rezirkulationsverhindernde Mittel entfallen, zusätzlich besteht hier jedoch noch der Vorteil, dass wegen der konvektionsunterstützenden Wirkung der Teilzirkulationsströmungen 6 bzw. 7 die beiden Gebläse mit geringem Energieverbrauch betrieben werden können.

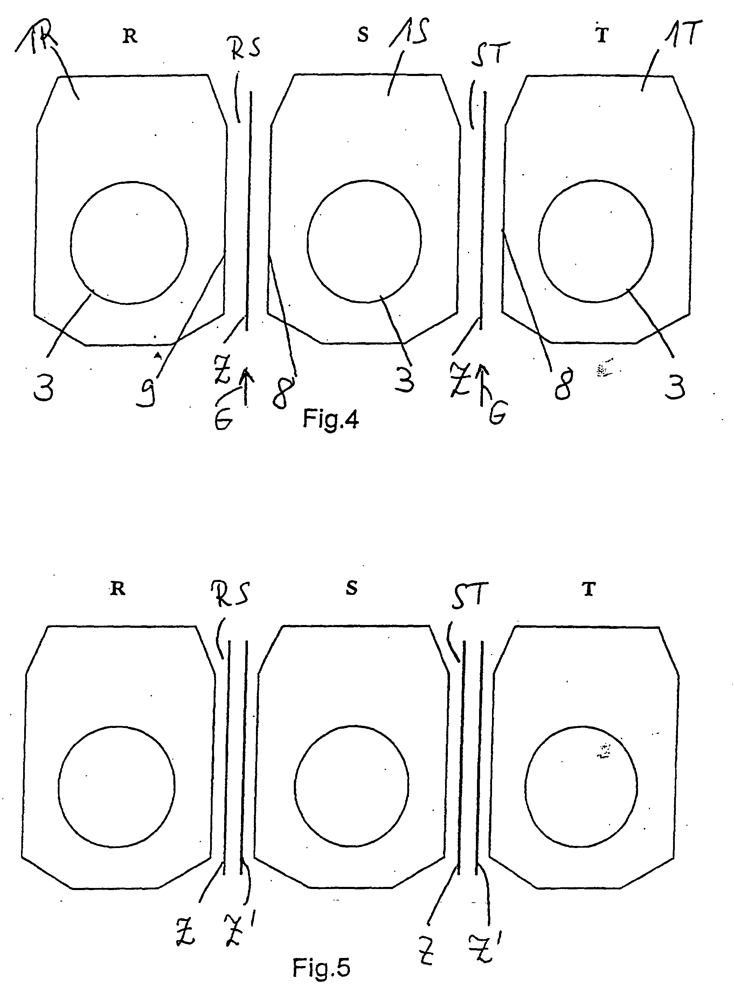

Die in den Figuren 1 bis 3 dargestellten einphasigen Anlagenabschnitte können mit Vorteil als mittlere Phase S eines dreiphasig ausgeführten Anlagenabschnitts mit den Phasen R, S und T Verwendung finden. In diesem in Figuren 4 und 5 dargestellten Anlagenabschnitt sind die den einzelnen Phasen zugeordneten Gehäuse 1R, 1S und 1T unter Bildung vertikal ausgerichteter Kanäle RS und ST mit Abstand zueinander angeordnet und sind im mittleren der drei Gehäuse 1S die in den beiden Figuren 4 und 5 nicht dargestellten Gebläse angeordnet. Die an die Gehäuseseitenwände 8 und 9 des Gehäuses 1S geführte Wärme wird durch die Kaminwirkung der Kanäle RS und ST weggeführt. Zusätzlich kann eine parallel zu den begrenzenden Seitenwänden 9 und 8 der benachbarten Gehäuse 1R und1S bzw. 1S und 1T geführte Zwischenwand Z im Kanal RS bzw. ST angeordnet sein. In dieser Zwischenwand werden keine Verluste erzeugt und kann sich so ein Temperaturunterschied zwischen der Gehäuseseitenwand 9 bzw. 8 oder 9 bzw. 8 und der Zwischenwand Z einstellen. Somit kann von den Gehäuseseitenwänden 8 bzw. 9 an die Zwischenwand Z Strahlungsenergie abgegeben werden. Die durch die Strahlungsenergie erwärmte Zwischenwand wird durch freie Konvektion der Umgebungsluft gekühlt. Die zusätzliche Wärmeabfuhr beträgt bis zu ca. 10 % der Gesamtverlustwärme, wenn die Zwischenwand Z - wie Fig. 4 entnommen werden kann - in der Mitte zwischen beiden Gehäuseseitenwänden 9 und 8 angeordnet und lediglich glatt ausgebildet ist. Die Zwischenwand ist mit Vorteil thermisch leitend mit dem Gehäuse, z. B. 1S, verbunden oder ist sogar integraler Bestandteil des Gehäuses.

Wie aus Fig. 5 ersichtlich ist, kann in einer weiteren Ausführungsform des Anlagenabschnitts nach der Erfindung parallel zur Zwischenwand Z eine weitere Zwischenwand Z' angeordnet sein. Bei dieser Ausführungsform wird die Wärmeabgabe an die Konvektionsströmung zusätzlich erhöht. Um eine noch bessere Wärmeabgabe zu erzielen, sollten die beiden Zwischenwände durch vertikal geführte Längsrippen verbunden sein.

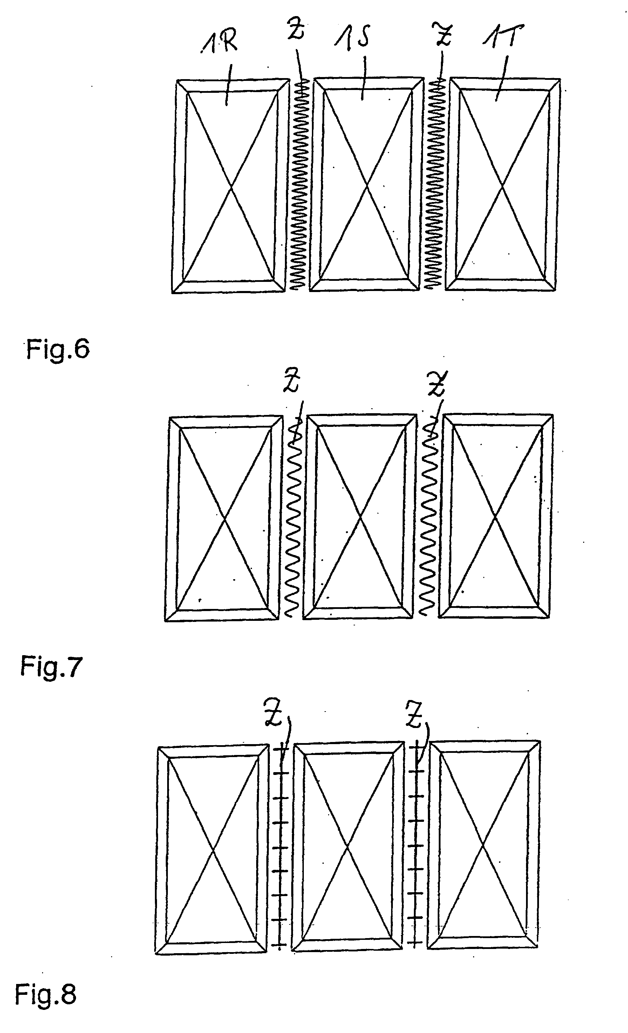

In den aus den Figuren 6 bis 8 entnehmbaren Ausführungsformen weist die Zwischenwand oberflächenvergrössernde Mittel auf, durch welche die Wärmeabgabe an die natürliche Konvektionsströmung zusätzlich verbessert wird. Solche Mittel umfassen mit Vorteil eine Zwischenwand Z mit gewellter Struktur. Die Struktur bildet vertikal geführte Abzugskanäle für die Konvektionsströmung und enthält Wellen, welche eng (Fig.6) oder weit (Fig.7) ausgebildet sein können, oder Längsrippen (Fig.8). Um die freie Konvektionsströmung nicht zu behindern, sollten die Gehäuse 1R und 1S bzw.1S und 1T einen Mindestabstand voneinander aufweisen.

Zusätzlich kann die Wärmeabgabe durch eine durch die Kanäle RS bzw. ST forciert geführte Strömung verbessert werden. Zu diesem Zweck kann ein oder können zwei oder auch mehrere diese forcierte Strömung erzeugendes Aussengebläse diese forcierte Strömung erzeugende Aussengebläse vorgesehen sein. Ein solches Aussengebläse ist in Fig.4 symbolisch als Pfeil dargestellt und mit dem Bezugszeichen G versehen.

### Bezugszeichenliste:

- 1, 1R, 1S, 1T: Gehäuse
- 2: Symmetrieebene
- 3: Stromleiter
- 4, 5: Gebläse
- 6, 7: Teilzirkulationsströmungen
- 8, 9: Gehäuseseitenwände
- 10: Gehäusedecke
- 11: Gehäuseboden
- 12, 13: Strömungsleitflächen
- 14: Strömungspfeil
- G: Aussengebläse
- R, S, T: Phasen
- RS, ST: Kanäle
- Z, Z': Zwischenwände

## Patentansprüche

1. Abschnitt einer elektrischen Hochspannungsanlage, insbesondere eines Generatorschalters, mit einem überwiegend symmetrisch ausgebildeten, gasgefüllten Gehäuse (1R, 1S, 1T), einem entlang der Symmetrieebene (2) im Gehäuse (1R, 1S, 1T) erstreckten Stromleiter (3) und mit Kühlmitteln zum Erzeugen einer V erlustwärme vom Stromleiter (3) abführenden Zirkulationsströmung, **dadurch gekennzeichnet, dass** die Kühlmittel mindestens eine Strömungsquelle (4, 5) enthalten, und dass die mindestens eine Strömungsquelle (4, 5) derart im Inneren des Gehäuses (1R, 1S, 1T) angeordnet und derart ausgebildet ist, dass sich bei Betrieb der Anlage zwei von der Symmetrieebene (2) begrenzte, spiegelsymmetrische Teilzirkulationsströmungen (6, 7) ausbilden, welche jeweils längs einer ersten Gehäusewand (8, 9) rezirkulationsfrei von einer von der Symmetrieebene (2) geschnittenen zweiten Gehäusewand (10,11) zu einer von der Symmetrieebene (2) geschnittenen dritten Gehäusewand (10,11) geführt sind.

2. Anlagenabschnitt nach Anspruch 1, **dadurch gekennzeichnet, dass** zwei Strömungsquelle (4, 5) orgesehen sind, von denen jeweils eine (4,5) je einer der beiden Teilzirkulationsströmungen (6, 7) zugeordnet ist.

3. Anlagenabschnitt nach Anspruch 2, **dadurch gekennzeichnet, dass** die Symmetrieebene (2) uberwiegend vertikal ausgerichtet ist, und dass die erste Gehäusewand eine Seitenwand (8, 9), die zweite Gehäusewand eine Decke (10) und die dritte Gehäusewand ein Boden (11) des Gehäuse (1R, 1S,1T).

4. Anlagenabschnitt nach Anspruch 3, **dadurch gekennzeichnet, dass** die beiden Strömungsquellen (4, 5) an entgegengesetzten Enden des Gehäusebodens (11) befestigt sind, und dass an den an den beiden Enden ansetzenden Gehäuseseitenwände (8, 9) Strömungsleitflächen (12, 13) vorgesehen sind.

5. Anlagenabschnitt nach Anspruch 3, **dadurch gekennzeichnet, dass** die Strömungsquellen (4, 5) an den entgegengesetzten Enden der Gehäusedecke (10) oder des Gehäusebodens (11) befestigt sind.

6. Anlagenabschnitt nach einem der Ansprüche 1 bis 5 mit mindestens drei jeweils einen Stromleiter aufnehmenden Gehäusen (1R, 1S, 1T), welche an Gehäuseseitenwänden (8, 9) nebeneinander angeordnet sind, **dadurch gekennzeichnet, dass** die Gehäuse (1R, 1S, 1T) unter Bildung vertikal ausgerichteter Kanäle (RS, ST) mit Abstand voneinander angeordnet sind, und dass im mittleren der drei Gehäuse (1S) die Strömungsquelle(n) (4, 5) vorgesehen ist (sind).

7. Anlagenabschnitt nach Anspruch 6, **dadurch gekennzeichnet, dass** in mindestens einem der Kanäle (RS, ST) eine parallel zu den begrenzenden Seitenwänden (9, 8) der benachbarten Gehäuse (1R,1S, 1S, 1T) geführte erste Zwischenwand (Z) angeordnet ist.

8. Anlagenabschnitt nach Anspruch 7, **dadurch gekennzeichnet, dass** die erste Zwischenwand (Z) oberflächenvergrössernde Mittel aufweist.

9. Anlagenabschnitt nach Anspruch 8, **dadurch gekennzeichnet, dass** die oberflächenvergrössernden Mittel vertikal geführte Wellen und/oder Längsrippen umfassen.

10. Anlagenabschnitt nach einem der Ansprüche 7 bis 9, **dadurch gekennzeichnet, dass** in dem mindestens einen Kanal (RS, ST) eine parallel zur ersten Zwischenwand (Z) geführte zweite Zwischenwand (Z') angeordnet ist.

11. Anlagenabschnitt nach Anspruch 10, **dadurch gekennzeichnet, dass** die erste und die zweite Zwischenwand durch vertikal geführte Längsrippen verbunden sind.

12. Anlagenabschnitt nach einem der Ansprüche 6 bis 11, **dadurch gekennzeichnet, dass** mindestens eine der Erzeugung einer Gasströmung in den Kanälen (RS, ST) dienende Strömungsquelle (G) vorgesehen ist.

## Claims

1. Section of an electrical high-voltage system, in particular a generator circuit breaker, having a gas-filled housing (1R, 1S, 1T) of predominantly symmetrical design, a conductor (3) extending along the plane of symmetry (2) in the housing (1R, 1S, 1T), and having cooling means for producing a circulation flow which dissipates heat loss from the conductor (3), **characterized in that** the cooling means contain at least one flow source (4, 5) and **in that** the at least one flow source (4, 5) is arranged in the interior of the housing (1R, 1S, 1T) and is designed in such a way that, during the operation of the system, two mirror-symmetrical circulation part flows (6, 7) are formed which are bounded by the plane of symmetry (2) and which are in each case guided without recirculation along a first housing wall (8, 9) from a second housing wall (10, 11), which is intersected by the plane of symmetry (2), to a third housing wall (10, 11), which is intersected by the plane of symmetry (2).

2. Section of a system according to claim 1, **characterized in that** two flow sources (4, 5) are provided, each of which (4, 5) is assigned to one of the two circulation part flows (6, 7).

3. Section of a system according to Claim 2, **characterized in that** the plane of symmetry (2) is aligned predominantly vertically, and **in that** the first housing wall is a side wall (8, 9), the second housing wall is a top (10) and the third housing wall is a bottom (11) of the housing (1R, 1S, 1T).

4. Section of a system according to Claim 3, **characterized in that** the two flow sources (4, 5) are fixed to opposite ends of the bottom (11) of the housing, and **in that** flow guide surfaces (12, 13) are provided at the two housing side walls (8, 9) coming from the two ends.

5. Section of a system according to claim 3, **characterized in that** the flow sources (4, 5) are fixed to the opposite ends of the top (10) of the housing or of the bottom (11) of the housing.

6. Section of a system according to one of the Claims 1 to 5, having at least three housings (1R, 1S, 1T) which each accommodate a conductor and which are arranged beside one another at housing side walls (8, 9), **characterized in that** the housings (1R, 1S, 1T) are arranged at a distance from one another, forming vertically aligned channels (RS, ST), and **in that** the flow source(s) (4, 5) is/are arranged in the central housing (1S) of the three housings.

7. Section of a system according to Claim 6, **characterized in that** in at least one of the channels (RS; ST) there is arranged a first intermediate wall (Z), which is led parallel to the bounding side walls (9, 8) of the adjacent housings (1R, 1S; 1S, 1T).

8. Section of a system according to Claim 7, **characterized in that** the first intermediate wall (Z) has means for enlarging its surface area.

9. Section of a system according to Claim 8, **characterized in that** the means enlarging the surface area comprise corrugations led vertically and/or longitudinal ribs.

10. Section of a system according to one of the Claims 7 to 9, **characterized in that** in the at least one channel (RS; ST) there is arranged a second intermediate wall (Z') led parallel to the first intermediate wall (Z).

11. Section of a system according to Claim 10, **characterized in that** the first and second intermediate walls are joined by longitudinal ribs led vertically.

12. Section of a system according to one of the Claims 6 to 11, **characterized in that** at least one flow source (G) serving to produce a gas flow in the channels (RS, ST) is provided.

## Revendications

1. Section d'une installation électrique à haute tension, en particulier d'un interrupteur de générateur, avec un boîtier rempli de gaz, de forme sensiblement symétrique (1R, 1S, 1T), un conducteur de courant (3) s'étendant dans le boîtier (1R, 1S, 1T) le long du plan de symétrie (2) et avec des moyens de refroidissement pour produire un écoulement de circulation évacuant la chaleur perdue du conducteur de courant (3), **caractérisée en ce que** les moyens de refroidissement comprennent au moins une source d'écoulement (4, 5), et **en ce que** la au moins une source d'écoulement (4, 5) est disposée à l'intérieur du boîtier (1R, 1S, 1T) et est configurée de telle façon qu'il se forme, pendant le fonctionnement de l'installation, deux écoulements de circulation partiels (6, 7) symétriques délimités par le plan de symétrie (2), qui sont guidés chacun le long d'une première paroi du boîtier (8, 9) sans recirculation depuis une deuxième paroi de boîtier (10, 11) coupée par le plan de symétrie (2) vers une troisième paroi de boîtier (10, 11) coupée par le plan de symétrie (2).

2. Section d'installation selon la revendication 1, **caractérisée en ce qu'**il est prévu deux sources d'écoulement (4, 5), dont chacune (4, 5) est associée à un des deux écoulements de circulation partiels (6, 7).

3. Section d'installation selon la revendication 2, **caractérisée en ce que** le plan de symétrie (2) est orienté de manière sensiblement verticale, et **en ce que** la première paroi de boîtier est une paroi latérale (8, 9), la deuxième paroi de boîtier est un plafond (10) et la troisième paroi de boîtier est un fond (11) du boîtier (1R, 1S, 1T).

4. Section d'installation selon la revendication 3, **caractérisée en ce que** les deux sources d'écoulement (4, 5) sont fixées à des extrémités opposées du fond de boîtier (11), et **en ce qu'**il est prévu des surfaces de guidage d'écoulement (12, 13) sur les parois latérales de boîtier (8, 9) reliées aux deux extrémités.

5. Section d'installation selon la revendication 3, **caractérisée en ce que** les sources d'écoulement (4, 5) sont fixées aux extrémités opposées du plafond de boîtier (10) ou du fond de boîtier (11).

6. Section d'installation selon l'une quelconque des revendications 1 à 5, avec au moins trois boîtiers (1R, 1S, 1T) contenant chacun un conducteur de courant, qui sont disposés l'un à côté de l'autre sur des parois latérales de boîtier (8, 9), **caractérisée en ce que** les boîtiers (1R, 1S, 1T) sont disposés à distance l'un de l'autre en formant des canaux orientés verticalement (RS, ST), et **en ce que** la/les source(s) d'écoulement (4, 5) est/sont prévue(s) dans le boîtier (1S) situé au milieu des trois boîtiers.

7. Section d'installation selon la revendication 6, **caractérisée en ce qu'**une première paroi intermédiaire (Z) menée parallèlement aux parois latérales (9, 8) limitant les boîtiers voisins (1R, 1S; 1S, 1T) est disposée dans au moins un des canaux (RS, ST).

8. Section d'installation selon la revendication 7, **caractérisée en ce que** la première paroi intermédiaire (Z) présente des moyens d'agrandissement de la surface.

9. Section d'installation selon la revendication 8, **caractérisée en ce que** les moyens d'agrandissement de la surface comprennent des ondulations et/ou des nervures longitudinales orientées verticalement.

10. Section d'installation selon l'une quelconque des revendications 7 à 9, **caractérisée en ce qu'**une deuxième paroi intermédiaire (Z') menée parallèlement à la première paroi intermédiaire (Z) est disposée dans le au moins un canal (RS, ST).

11. Section d'installation selon la revendication 10, **caractérisée en ce que** la première et la deuxième parois intermédiaires sont assemblées par des nervures longitudinales menées verticalement.

12. Section d'installation selon l'une quelconque des revendications 6 à 11, **caractérisée en ce qu'**il est prévu au moins une source d'écoulement (G) servant à la production d'un écoulement de gaz dans les canaux (RS, ST).
